# EUROPEAN PATENT SPECIFICATION

(11) **EP 1 982 368 B1**
(45) Date of publication and mention of the grant of the patent: **23.03.2011**
(21) Application number: 07704499.8
(22) Date of filing: 09.02.2007
(51) Int. Cl.: H01M 2/38, H01M 10/42, H01M 10/06, H01M 10/12, H01M 4/76, H01M 10/14, H01M 4/68

(54) **ELECTRIC STORAGE BATTERIES WITH ELECTROLYTE AGITATION**
ELEKTRISCHE SPEICHERBATTERIEN MIT ELEKTROLYT-AGITATION
ACCUMULATEURS D'ÉNERGIE ÉLECTRIQUE À AGITATION DE L'ÉLECTROLYTE

(30) Priority: 09.02.2006 EP 06101433
(43) Date of publication of application: 22.10.2008
(73) Proprietor: Amer-Sil S.A., 8287 Kehlen (LU)
(72) Inventor: LAMBERT, Urbain, L-8323 Capellen (LU)
(74) Representative: Office Freylinger
(86) International application number: PCT/EP2007/051285
(87) International publication number: WO 2007/090893

(56) References cited:
- EP-A- 0 383 044
- EP-A- 0 585 780
- EP-A- 1 720 210
- US-A- 4 048 399
- US-A- 4 161 503
- US-A- 4 207 384
- US-A- 4 283 467
- US-A- 4 693 947

## Description

### Technical field

The present invention generally relates to electric storage batteries, such as tubular type lead acid batteries, incorporating an air-bubbling electrolyte agitation device.

### Background Art

Lead acid batteries are widely used and include adjacent positive and negative electrodes immersed in an electrolyte and spaced by separators.

Lead-acid batteries of the tubular type are customarily constructed with tubular positive plates, constituent parts of which include: a grid member having a top bar; a post or burning lug and a plurality of current carrying spines, pencils of active material surrounding the current carrying spines; tubular bodies arranged to support and confine the pencils of active material and maintain such active mass in contact with the current carrying spines; and means for closing ends of the tubes.

The tubular bodies are required to provide a number of functions including: enclosure and support of the active material to maintain the active material in contact with the spines; maintenance of the dimensional stability of the pencils of active material particularly during periods of swelling of the active material; and, finally, provision of adequate communication between the electrolyte and the active material throughout the length of the tubular bodies.

From the early 1950s up to now, the tubular plate has evolved from the single tube design (PVC tubes and woven or braided tubes of C-glass fibers protected first by a perforated plastic armor, then by impregnation with phenolic resin) to the more economical and productive multitube gauntlet concept. The first generations of gauntlets, which are still in use, are made of woven polyester fabric impregnated with acrylic resin. Since the 1980s, the tubular gauntlet has further evolved to include modem non-woven fabrics. For example, US 4 161 503 describes gauntlets preferably made of non-woven polyester fabric impregnated with a thermoplastic polymer.

The material the most widely used by the industry to produce non-woven gauntlets in which the positive active mass (lead dioxide) is inserted for the production of tubular positive plates of lead-acid batteries, is a point-bonded polyester spunbond material impregnated with a thermoplastic resin, such as described for example in EP 1 720 210. The aim of such an impregnation with phenolic, acrylic or styrene-butadiene resins is to further protect the fabric material from oxidation without substantially reducing its overall porosity.

It is well known that industrial lead acid batteries, in most applications, are prone to electrolyte stratification:

During discharge, the PbO₂ from the positive plate is reduced into PbSO₄, taking sulfate ions from the sulfuric acid electrolyte, while Pb at the negative plate is oxidized into PbSO₄, also taking sulfate ions from the electrolyte.

During the recharge, on the contrary, the discharged positive and negative active materials PbSO₄ will be transformed back into PbO₂ at the positive plate and Pb at the negative plate. The surplus of current will be used for overcharging reactions to occur, namely water hydrolysis, i.e. oxygen evolution at the positive plate and hydrogen evolution at the negative plate.

As the current is not equally distributed from the top to the bottom of the plate, the efficiency of charging and especially discharging reactions may vary and lead to a sulfate concentration gradient in the electrolyte called "acid stratification", i.e. a non-homogeneous acid specific gravity within a cell.

The situation where the upper part of the plate is fully recharged, while the lower plate has difficulties to be efficiently recharged leads to longer charging times, higher overcharge factor and increased water decomposition at the upper part of the cell and further stratification.

In order to overcome this stratification, most of the battery manufacturers use air bubbling to mix the electrolyte. Numerous different systems are known in the art for different types of batteries. Generally, a more or less complex plastic tubing is to be inserted at some stage of the manufacturing of the battery, then optionally attached or otherwise secured inside the battery and connected to a port, e.g. provided in the lid, which will be connected to a pressurized air supply when the battery is put into operation.

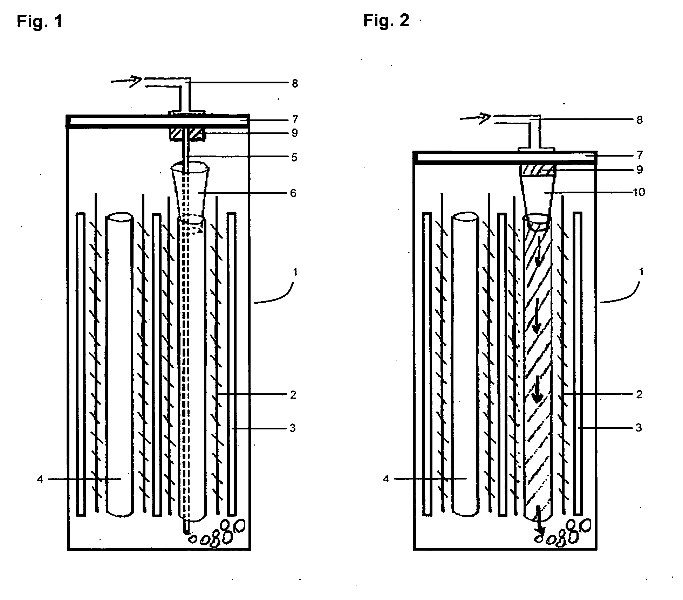

For tubular type batteries, one solution to prevent the need for extra space is to leave one of the outer tubes of one of the gauntlets empty (not filled with positive active mass) and to insert a long plastic tubing from the top to the bottom inside this empty tube (Figure 1). To facilitate this insertion of the long plastic tubing, a funnel shaped part acting as a guide is generally first placed on top of the empty gauntlet tube. The plastic tubing is then attached to a port in the lid of the cell, which port may be connected to an air-feeding device when the battery is put into operation. At regular interval, air is blown through the plastic tubing in order to mix up the sulfuric acid via air-bubbling and thus avoid electrolyte stratification.

As an example, the mixing of the electrolyte using air-bubbling can reduce the overcharge factor from 1.15% to 1.05%, thus leading to 10% to 15% higher recharge efficiency.

However, the use of such plastic tubing not only represents additional steps in the cell assembly process, as well as additional material costs, but also implies practical problems for the battery manufacturer, e.g. during insertion of the plastic tubing due to chocking inside the gauntlet tube.

### Technical problem

It is an object of the present invention to provide means to simplify the assembly of a tubular positive plate type battery, while providing efficient mixing of the electrolyte to prevent acid stratification.

### General Description of the Invention

In order to achieve this object, the present invention provides a multitube gauntlet for tubular type electric storage batteries, which gauntlet comprises multiple individual tubes having walls and an upper and a lower opening, thereby forming a cartridge belt type gauntlet, wherein the permeability to air of the walls of at least one, but not all of these individual tubes is reduced to such an extent that air bubbles form at or can reach the lower opening of the gauntlet tube when applying air to its upper opening under the conditions existing in said electric storage battery, thereby rendering said walls substantially impermeable to air.

Today, non-woven gauntlets are generally made from two sheets of fabric, which are attached together at regular intervals to form multiple, essentially parallel tubes. The subsequent insertion of rods at elevated temperature allows the thermoformation of the tubes. In the case of woven or knitted fabrics, the gauntlets are produced directly in the form of a multitube gauntlet by using specific weaving techniques, where the separations between the tubes are directly woven, resp. knitted. Therefore, contrary to the non-woven technology, no assembling step is necessary. The thermoformation step by inserting rods at elevated temperature is, in its principle, similar to the formation of the non-woven tubes. The fabric itself or the fibers and threads usually employed in their manufacture may be of any type known to the skilled person. Impregnation of the fibers or threads of such fabrics may be used to further increase their resistance to oxidation, while preserving high porosity. Such an impregnation is achieved by a solution or suspension of a suitable resin, such as preferably an aqueous dispersion of acrylic type polymer particles with a solid content between 30 and 70%. In both cases of non-woven and woven/knitted gauntlets, the fabrics are (and must remain) (micro)porous to permit the electrolyte solution to reach the active material. Hence, they are also permeable to air, and should even be as permeable as possible in order to increase the ionic transfer through the fabric walls (via the electrolyte), and consequently reduce the internal electrical resistance of the cell.

The present invention, by rendering one (or more if desired or needed) of these tubes substantially impermeable to air, e.g. by using an impermeabilising agent and/or another appropriate method, allows to directly use this tube instead of an additional plastic tubing, when connected to an air supply, to perform the mixing of the electrolyte solution by air-bubbling and thus efficiently prevent acid stratification. The major advantage for the battery manufacturer is a reduced number of assembly steps and fewer potential problems during assembly.

Air permeability is defined as the rate of airflow passing perpendicular through a known area under a prescribed air pressure differential between the two surfaces of a material. From this airflow rate, the air permeability of a fabric is obtained.

The expression "substantially impermeable to air" (and the simpler terms "impermeable" and "impervious" as used in the present document) means that the walls of such a tube are sufficiently airtight that air bubbles form at or can reach the lower end (outlet) of the gauntlet tube when applying air to its upper end (inlet) when used in a battery. In other words, although the walls need not to be completely impervious to air, they should however permit at least some bubbling through the lower opening of the gauntlet tube. Hence, this substantial (and sufficient) impermeability to air depends on the particular operating conditions existing in a target battery, such as, among others, on the air pressure and air rate applied, the length and diameter of the tube, i.e. the surface of the tube walls, and the pressure at the outlet of the tubes, i.e. the height of the electrolyte solution above said outlet, or, generally speaking, the characteristics of the target battery.

Hence, knowing the characteristics of the target battery, the skilled person may easily determine the extent of impermeabilisation necessary to obtain air bubbles at the lower end of the impervious tube. As an example in typical batteries, the permeability to air of the walls of the at least one tube should be less than 0.17 m³/(m².s) [1 l/(cm².min)] at an air pressure of 2 10⁵ Pa [2 bar], preferably less than 0.08 m³/(m².s) [0.5 l/(cm².min)].

Although any method to render the gauntlet fabric sufficiently impervious may be used to achieve this goal, in a convenient and preferred aspect of the invention, the walls of said gauntlet tube(s) are treated with an impermeabilising agent, e.g. coated or impregnated with a hotmelt.

In fact, such a treatment by coating, spaying, brushing, dipping, impregnation, etc. of one (or more) of the gauntlet tubes with a hotmelt collapses the pores of the fabric to such an extent that air can be directly blown through the tube (Figure 2), i.e. without the need of the additional internal plastic tubing (Figure 1).

Impermeabilising agents, which may be used to render fabrics impervious to air, are generally known to the skilled person in the art. In a preferred embodiment of the invention, hotmelts are used to this purpose. Hotmelts are solvent-free thermoplastic materials, which are applied in the melted state. In the present context, such hotmelts must be acid-resistant and they may generally be selected from thermoplastic polyolefin based polymers, e.g. polymers copolymers and block copolymers of ethylene, such as polyethylene, EVA (copolymer of ethylene and vinyl acetate), etc., of propylene, polyvinyl acetate, polyamides, or other hydrocarbon resins, or mixtures thereof, Hence, in practice, their usability is further determined on one hand by the operating conditions inside the battery and on the other hand by the nature of and the compatibility with the gauntlet fabric used.

In a still further preferred aspect of the invention where the fabric used comprises a woven or knitted fabric, an advantageous method for reducing the permeability to air of the walls of the at least one tube is achieved by weaving or knitting the fabric more densely (e.g. 36 longitudinal threads per cm instead of 18 longitudinal threads per cm) and/or by using more voluminous threads with less torsion (e.g. type 330/72 from Sinterama) at least for those parts of the fabric relative to said at least one individual tube. If necessary or desired, these specially woven or knitted parts may also be further impermeabilised or have their impermeability adjusted by treatment with an impermeabilising agent as described above.

In this context, it has to be noted that the extent of impermeabilising said tube need not to be homogeneous along the whole height of the tube. Hence, to achieve the necessary effect of obtaining air bubbles at the lower end, it might be sufficient to treat only the upper part of the tube, e.g. by coating only this part of the tube with the hotmelt, or to provide an increasing permeability gradient from the upper to the lower end, e.g. by applying a decreasing quantity of hotmelt from the top to the bottom of the tube, etc.

Hence, a further advantage of the invention is that the impermeability may be fine-tuned to the particular needs by different ways, such as by adjusting the quantity and the location of the permeabilising agent, by varying the weaving or knitting density, by using different types of threads or any combination thereof.

Further methods for rendering the walls of the fabric substantially impervious to air may also be contemplated and are within the scope of the present invention, such as applying a self-adhesive or thermofusible film onto at least part of said walls or similar.

Although theoretically any one (or a plurality) of the tubes of the gauntlet may thus be impermeabilised, it is especially preferred for practical reasons, such as ease of assembly, design of the battery and in particular of the positive plate, that the one tube is an outer tube, i.e. the outermost tube on either side (or both sides if mixing is desired on both sides of the battery) of the cartridge belt type gauntlet.

A further advantage is the lack of additional securing means for such a mixing tube as the gauntlet itself is firmly held by the tubular plate, thereby further simplifying the assembly of the battery.

A still further advantage is that the impermeabilisation step, be it by way of a treatment with an impermeabilising agent or by using special weaving or knitting techniques, renders the so modified tube more rigid, which further facilitates the later assembly of the battery.

Hence, the use of gauntlets according to a preferred embodiment of the invention does not require actual modifications in the overall design and configuration of the battery itself. Furthermore, the process of assembly of the batteries will only need small adjustments by omitting previously needed steps to benefit from the present invention.

In a still further embodiment of the invention, the impermeabilised tube(s) is (are) marked with a distinctive label or color so as to ensure e.g. a correct orientation of the gauntlet inside the battery during assembly, e.g. by printing, stamping, etc, preferably by directly using colored fibers/threads (for woven gauntlets) or sewing thread (in case of non-woven gauntlets) in the corresponding areas or simply by using a colored hotmelt as impermeabilising agent.

For some applications, in particular where the lower end of the gauntlet is near the bottom of battery case, the at least one substantially impermeable tube may be shorter than the other tubes to avoid re-suspending solid particles.

In a further aspect, the invention also provides a process for manufacturing multitube gauntlets for electric storage batteries, comprising the steps of:
(a) forming a double layer of (woven, knitted or non-woven) fabric with attachments at regular intervals to form individual parallel tubes having walls and an upper and a lower opening and
(b) reducing the permeability to air of parts of the sheets of fabric relative to at least one, but not all of these individual tubes to such an extent that air bubbles form at the lower opening of the gauntlet tube when applying air to its upper opening under conditions existing in said electric storage battery
wherein step (b) comprises the operation of treating with an impermeabilising agent, applying a self-adhesive film, weaving or knitting the fabric more densely or weaving or knitting the fabric by using more voluminous threads or any combination thereof.

In a further embodiment, step (a) of the process for manufacturing multitube gauntlets for electric storage batteries, comprises the operations of:
➢ stacking two discrete layers or sheets of fabric, e.g. woven, non-woven or knitted, preferably non-woven fabric,
➢ attaching the layers or sheets at regular intervals to form individual parallel tubes by any appropriate method.

The nature of the fabric, as well as of the impermeabilising agent are described above. The attachment of the sheets of fabric may be done by any appropriate method, such as stitching, sewing, gluing, thermobonding, etc.

In a still further embodiment, step (a) of the process comprises the operations of:
➢ weaving or knitting a double layer of fabric, wherein both layers are woven or knitted so as to be attached at regular intervals and to form said individual parallel tubes.

Such a double layer of fabric with attachments at regular intervals may be produced on a conventional loom, in two separate layers, which are crossed at regular predetermined intervals during weaving, so that the layer initially on the top becomes the lower layer in the following interval etc.

It has to be noted that in principle the air permeability reducing step may be effected before, during or after the attachment of the sheets. It is to be understood, that if the treatment is done before the attachment of the sheets, this air permeability reducing step, be it by treating the fabric with an impermeabilising agent, by weaving or knitting the fabric more densely or by weaving or knitting the on those parts of the sheets, which will form the substantially impermeable tube(s) after said attachment.

Typical weaving or knitting densities useable to render the fabric substantially impermeable to air range from 20 to 50 threads per cm (instead of typically 15 to 20 threads per cm) using e.g. (but not restricted to) multifilament high tenacity threads with torsion ranging from 0 to 400 rotations or twists per meter, or spunyarn thread type Ne 24/2 or Ne 12/1 with torsion ranging from 350 to 500 rotations or twists per meter.

Voluminous threads useable for the impermeabilisation are low or high tenacity multifilament threads that have been made more voluminous by a specific air blowing process well known from the industry. The twist is minimal (typically closed to zero, i.e. the thread is not twisted or not more than a few twists per meter) in order to increase the volume occupied by the filaments altogether.

Furthermore, the manufacturing process of such gauntlets generally also comprises a step of thermoforming the double layer of fabric to impart a dimensionally stable shape to the gauntlet. Depending on the chosen air permeability reducing step, the air permeability reducing step may be effected before, during or after this thermoforming. Preferably, in the case of a treatment with an impermeabilising agent, this operation is made on the flat product before thermoforming on the attached sheets.

The air permeability reducing step with an impermeabilising agent may be accomplished by any known means, such as coating, dipping, spraying, etc. In a preferred embodiment, a hotmelt is applied by a hotmelt applicator device on both external sides of one tube of the flat (not yet thermoformed) gauntlet.

As mentioned above, the gauntlets described herein are for use in an electric storage battery, such as preferably industrial, stationary or traction type lead acid battery.

Hence in a further aspect, the invention provides an electric storage battery comprising :
➢ a gauntlet as described above,
➢ a port for connecting to a pressurized air supply, and
➢ adapter means fluidly connecting said port to said at least one tube substantially impermeable to air.

The port will generally be located in the lid of the battery and will be connected to a pressurized air supply when putting the battery into operation, the pressurized air being provided continuously, intermittently at regular intervals or controlled via an electrolyte concentration measuring device.

The adapter means are used to fluidly connect the port to the upper end (inlet) of the impervious tube(s). Hence, their shape will depend on the relative location of the port, and of the inlet of the tube(s) and the number of tubes to be provided with pressurized air.

The fitting of the adapter means to the inlet of the tube and/or to the port may be achieved by any known means, such as gluing, squeezing, clipping, screwing, shrink-fitting, etc.

In a preferred embodiment, the adapter means comprise an inlet fitted to said port and at least one tapered outlet tight-fitting into the at least one tube substantially impermeable to air.

Hence, in their most simple configuration using one impervious tube per port for the mixing of the electrolyte, the adapter means have roughly cylindrical to conical shape with a tapered end for insertion and tight-fitting inside said impervious tube.

It has to be noted that if more than one gauntlet is to be used in a cell, not all gauntlets must incorporate impervious tubes. Often, one impervious tube (in a gauntlet according to the invention) per cell will be sufficient to effect the mixing of the electrolyte.

Conversely, if one port is to provide more than one impervious tube (possibly on different gauntlets) with pressurized air, the adapter means will act as a distributor whose shape will of course depend on the number of impervious tubes to be connected and their relative locations inside the cell, as will be easily understood by the skilled person.

The adapter means may be fitted to the port and the gauntlet during battery assembly, they may also be pre-fitted either to the gauntlet or to the port provided in the lid or they may be integral part of the lid, i.e. formed (e.g. by injection molding) during manufacturing of the battery lid.

Hence a still further aspect of the invention is a battery lid comprising a port for connecting to a pressurized air supply, and adapter means for fluidly connecting said port to at least one tube substantially impermeable to air of a gauntlet as previously described, wherein the adapter means are an integral part of said lid, i.e. are formed in one piece with the lid, e.g. by injection molding.

### Brief Description of the Drawings

A preferred embodiment of the invention will now be described, by way of example, with reference to the accompanying drawings in which:
Fig. 1 represents a known electrolyte mixing device with a plastic tubing inserted in one of the outer tubes of one of the tubular positive plates (prior art);
Fig. 2 shows an embodiment of the present invention without need of such additional plastic tubing. Air is directly blown through an outer tube of the gauntlet, this tube being rendered substantially impermeable to air, e.g. fully coated or impregnated with hotmelt;
Fig. 3 shows a hotmelt application system useful in the manufacture of the present gauntlets; and
Fig. 4 is a view of a gauntlet with one of its outer tubes rendered substantially impermeable to air, e.g. fully impregnated with hot-melt.

Further details and advantages of the present invention will become apparent from the following detailed description of not limiting embodiments with reference to the attached drawings.

### Description of Preferred Embodiments

In Figure 1, a prior art battery housing (1) closed with a lid (7) encloses negative plates (3) and positive tubular plates (not represented) inside a gauntlet (4), negative and positive plates being kept apart by separators (2). One of the tubes of the gauntlet does not contain active material, but a plastic tubing (5) inserted in this tube provided with an insertion guide (6) to facilitate the insertion of the plastic tubing during assembly. The plastic tubing (5) is connected to a port (9) provided in the lid (7) connected to an air supply (8).

Figure 2 represents a battery according to an embodiment of the invention having a simpler design (same numerals as in Fig.1 refer to same or equivalent features). Adapter (10) is connected to (or is integral part of) the port (9) and is fitted to the upper end (inlet) of the impervious tube, this tube being firmly secured by the adjacent positive plates (not represented).

The process for manufacturing non-woven (cartridge-belt type) gauntlets consists in joining two strips of polyester non-woven fabric at predetermined intervals, e.g. with a multi-needles sewing machine, then thermoforming the multitube panel into the desired tube geometry. Alternatively, the gauntlets are made from woven or knitted material as described above. The thermoforming may be made in an oven by inserting hot rods in-between both fabric layers, between each two adjacent sewing lines.

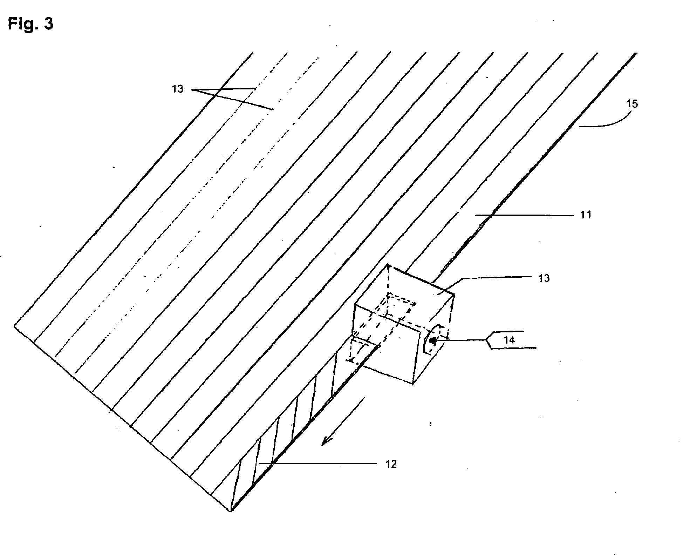

According to a preferred embodiment of the present invention, a hotmelt (14) is applied all along the (untreated) outer tube (11) to obtain a impermeabilized outer tube (12), as shown in Figure 3. In this Figure, the application device is fixed and the gauntlet is moved along the direction indicated by the arrow. This application or treatment can be done at any step of the process: before, during or after the sewing operation, before, during or after the thermoformation. Preferably, the application is made on the flat gauntlet (15) before thermoformation, using a hotmelt applicator (13).

The hotmelts usable are thermoplastic polyolefins, for example Lunatack^{®} PHC 7570 from H.B. Fuller.

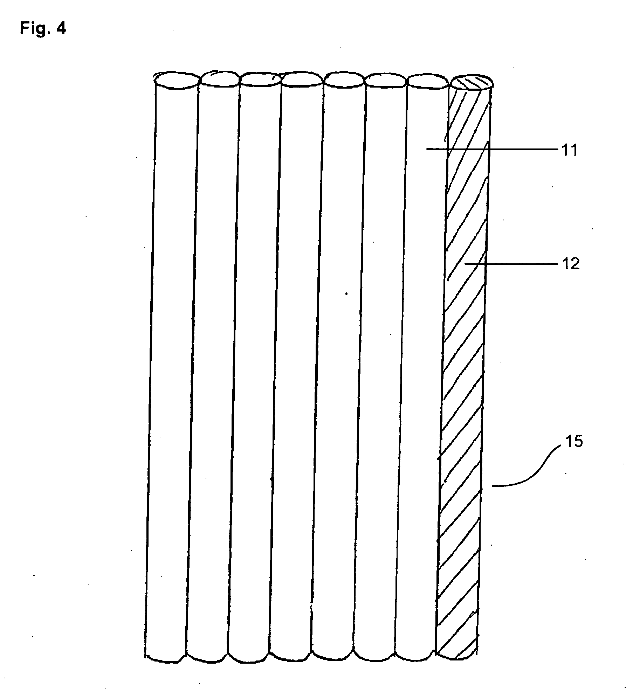

Figure 4 presents a typical gauntlet ready for use, i.e. thermoformed with untreated tubes (11) and one impermeabilised tube (12) optionally having a distinct color (highlighted in Fig 4).

### Examples

Air Permeability measurements of typical non-woven fabric

Permeability measurements have been performed according to two different methods (Franck or Coulter) on a non-woven polyester fabric (Fabric A). The results in Table 1 below show typical air permeability values of a non-woven polyester fabric used for the manufacture of gauntlets before any treatment with an impermeabilising agent (not according to the invention).

**Table 1: Air permeability of a spunbond non-woven polyester fabric before treatment**

| Fabric A | FRANK | | COULTER POROMETER II | | | |
|---|---|---|---|---|---|---|
| | test area: 20 cm² | | test area: 4.9 cm² | | | |
| | air permeability | | test flow | | air permeability | |
| measure No. | l/m²s | m³/(m²s) | l/min | m³/s | l/min.cm² | m³/(m²s) |
| 1 | 880 | 0.880 | 88.13 | 1.469 10⁻³ | 40.23 | 6.705 |
| 2 | 900 | 0.900 | 88.76 | 1.479 10⁻³ | 40.52 | 6.753 |
| 3 | 990 | 0.990 | 92.27 | 1.538 10⁻³ | 42.12 | 7.020 |
| 4 | 1200 | 1.200 | 92.16 | 1.536 10⁻³ | 42.07 | 7.012 |
| 5 | 900 | 0.900 | 88.22 | 1.47010⁻³ | 40.27 | 6.712 |
| 6 | 1120 | 1.120 | 89.77 | 1.496 10⁻³ | 40.98 | 6.830 |

| | | | | | | |
|---|---|---|---|---|---|---|
| Test Pressure = 0.2 bar = 2 10⁴ Pa | | | | | | |

Gauntlets with non-woven Fabric A

The results in Table 2 below show the variable efficiency of different hotmelts. While Hotmelt 1 (polyethylene and EVA-based hotmelt) is able to efficiently reduce the fabric permeability just after application, Hotmelt 2 (polyethylene based hotmelt) is only fully efficient after thermoforming, while Hotmelt 3 (polypropylene based hotmelt) is not able to provide sufficient impermeability to the fabric.

**Table 2: Air permeability of a spunbond non-woven polyester fabric after treatment**

| | test pressure | test flow | | air permeability | | test pressure | test flow | | air permeability | |
|---|---|---|---|---|---|---|---|---|---|---|
| Treated tube | bar (10⁵ Pa) | l/min | m³/s | l/min.cm² | m³/(m²s) | bar (10⁵ Pa) | l/min | m³/s | l/min.cm² | m³/(m²s) |
| Hotmelt 1 before thermoforming | 2 | 0.101 | 1.683 10⁻⁶ | 0.046 | 0.008 | 3.5 | 0.112 | 1.86710⁻⁶ | 0.051 | 0.009 |
| Hotmelt 1 after thermoforming | 2 | 0 | 0 | 0 | 0 | 3.5 | | 0 | 0 | |
| Hotmelt 2 before thermoforming | 2 | 18.48 | 3.080 10⁻⁴ | 8.438 | 1.406 | 3.5 | 31.86 | 5.310 10⁻⁴ | 14.54 | 2.423 |
| Hotmelt 2 after thermoforming | 2 | 0.037 | 6.167 10⁻⁷ | 0.017 | 0.003 | 3.5 | 0.032 | 5.333 10⁻⁷ | 0.014 | 0.002 |
| Hotmelt 3 before thermoforming | 2 | 85.32 | 1.422 10⁻³ | 38.95 | 6.492 | / | / | / | / | / |
| Hotmelt 3 after thermoforming | 2 | 85.32 | 1.422 10⁻³ | 38.95 | 6.492 | / | / | / | / | / |

Gauntlets with woven fabrics

The results in Table 3 below show the variable efficiency of different impermeabilisation techniques, alone or in combination, on woven fabrics. Each of these techniques is able to efficiently reduce the fabric permeability.

**Table 3: Air permeability of woven polyester fabric before and after various treatments to decrease the air permeability**

| | air permeability m³/(m²s) |
|---|---|
| Standard Woven fabric (not according to the invention) | 1.360 |
| Standard Woven fabric with denser weaving (more threads per cm) | 0.140 |
| Standard Woven fabric with additional voluminous thread | 0.062 |
| Standard Woven fabric with hotmelt | 0.060 |
| Standard Woven fabric with voluminous thread and hotmelt | 0 (not measurable) |

## Claims

1. A gauntlet for tubular type electric storage batteries comprising multiple individual tubes having walls and an upper and a lower opening and forming a cartridge belt type gauntlet,
**characterized in that**
the permeability to air of the walls of at least one, but not all of these individual tubes is reduced to such an extent that air bubbles can reach the lower opening of the gauntlet tube when applying air to its upper opening under conditions existing in said electric storage battery.

2. The gauntlet according to claim 1, wherein the reduced permeability to air of the at least one tube is less than 0.17 m³/(m².s) [1 l/(cm².min)] at a pressure of 2 10⁵ Pa [2 bar].

3. The gauntlet according to claim 1 or 2 comprising woven, knitted and/or non woven fabric.

4. The gauntlet according to claim 3, wherein the walls of the at least one tube comprises woven or knitted fabric and wherein the permeability to air of the walls of the at least one tube is reduced by weaving or knitting the fabric more densely and/or by using more voluminous threads.

5. The gauntlet according to any of the preceding claims, wherein the permeability to air of the walls of the at least one tube is reduced by coating or impregnation with a hotmelt or by applying a self-adhesive film.

6. The gauntlet according to claim 5, wherein the hotmelt is chosen from polymers, copolymers and block copolymers of ethylene, of propylene, of ethylene and vinyl acetate, polyvinyl acetate, polyamides, other hydrocarbon resins or mixtures thereof.

7. The gauntlet according to any of the preceding claim, wherein the at least one tube is an outer tube.

8. Use of a gauntlet according to any of claims 1 to 7 in an electric storage battery.

9. A process for manufacturing multitube gauntlets for electric storage batteries, comprising the steps of:
(a) forming a double layer of fabric with attachments at regular intervals to form individual parallel tubes having walls and an upper and a lower opening and
(b) reducing the permeability to air of parts of the sheets of fabric relative to at least ones, but not all of these individual tubes to such an extent that air bubbles form at the lower opening of the gauntlet tube when applying air to its upper opening under conditions existing in said electric storage battery wherein step (b) comprises the operation of treating with an impermeabilising agent, applying a self-adhesive film, weaving or knitting the fabric more densely or weaving or knitting the fabric by using more voluminous threads or any combination thereof.

10. The process according to claim 9, wherein step (a) comprises the operations of:
➢ stacking two discrete layers of fabric,
➢ attaching the layers at regular intervals by sewing, gluing or thermobonding to form said individual parallel tubes.

11. The process according to claim 9, wherein step (a) comprises the operations of:
➢ weaving or knitting a double layer of fabric, wherein both layers are woven or knitted so as to be attached at regular intervals and to form said individual parallel tubes.

12. The process according to claim 9, further comprising the step of thermoforming the double layer of fabric.

13. A battery lid comprising
➢ a port for connecting to a pressurized air supply, and
➢ adapter means for fluidly connecting said port to said at least one tube with reduced permeability to air of a gauntlet according to any of claims 1 to 7,
wherein the port and the adapter means form an integral part of said lid.

14. An electric storage battery comprising
➢ a gauntlet having at least one tube with reduced permeability to air according to any of claims 1 to 7,
➢ a port for connecting to a pressurized air supply, and
➢ adapter means fluidly connecting said port to said at least one tube with reduced permeability to air
wherein the port and the adapter means are preferably integral part of a battery lid according to claim 13.

15. The electric storage battery according to claim 14, wherein the adapter means comprise an inlet fitted to said port and at least one tapered outlet tight-fitting into said at least one tube with reduced permeability to air.

## Patentansprüche

1. Stulpe für Stromspeicherbatterie des röhrenförmigen Typs, die mehrere einzelne Röhren mit Wänden und einer oberen und einer unteren Öffnung umfasst und eine Stulpe des Kartuschengurttyps bildet,
**dadurch gekennzeichnet, dass**
die Luftdurchlässigkeit der Wände von mindestens einer, jedoch nicht allen dieser einzelnen Röhren auf solch ein Ausmaß verringert wird, dass Luftblasen die untere Öffnung der Stulpenröhre erreichen können, wenn Luft auf deren obere Öffnung unter Bedingungen, die in der Stromspeicherbatterie vorherrschen, beaufschlagt wird

2. Stulpe nach Anspruch 1, wobei die verringerte Luftdurchlässigkeit der mindestens einen Röhre bei einem Druck von 2 x 10⁵ Pa [2 bar] weniger als 0,17 m³/(m² s) [1 l/(cm².min)] beträgt

3. Stulpe nach Anspruch 1 oder 2, die Fasergewebe, Gewirke und/oder Vliesstoff umfasst.

4. Stulpe nach Anspruch 3, wobei die Wände der mindestens einen Röhre Fasergewebe oder Gewirke umfasst und wobei die Luftdurchlässigkeit der Wände der mindestens einen Röhre verringert wird, indem der Stoff dichter gewebt oder gewirkt wird und/oder voluminösere Fäden verwendet werden

5. Stulpe nach einem der vorhergehenden Ansprüche, wobei die Luftdurchlässigkeit der Wände der mindestens einen Röhre durch Beschichten oder Imprägnieren mit einem Schmelzklebstoff oder durch Auftragen einer Selbstklebefolie verringert wird

6. Stulpe nach Anspruch 5, wobei der Schmelzklebstoff aus Polymeren, Copolymeren und Blockcopolymeren von Ethylen, Propylen, Ethylen und Vinylacetat, Polyvinylacetat, Polyamiden, anderen Kohlenwasserstoffharzen oder Gemischen davon ausgewählt ist

7. Stulpe nach einem der vorhergehenden Ansprüche, wobei es sich bei der mindestens einen Röhre um eine äußere Röhre handelt

8. Verwendung einer Stulpe nach einem der Ansprüche 1 bis 7 in einer Stromspeicherbatterie.

9. Verfahren zur Herstellung von Stulpen mit mehreren Röhren für Stromspeicherbatterien, das die folgenden Schritte umfasst:
(a) Bilden einer Doppelschicht aus Stoff mit Aufsätzen in regelmäßigen Abständen, um einzelne, parallele Röhren mit Wänden und einer oberen und einer unteren Öffnung zu bilden, und
(b) Verringern der Luftdurchlässigkeit von Teilen der Gewebebahnen in Bezug auf mindestens eine, jedoch nicht alle dieser einzelnen Röhren auf solch ein Ausmaß, dass sich Luftblasen an der unteren Öffnung der Stulpenröhre bilden, wenn Luft auf deren obere Öffnung unter Bedingungen, die in der Stromspeicherbatterie vorherrschen, beaufschlagt wird,
wobei Schritt (b) den Vorgang des Behandelns mit einem undurchlässig machenden Mittel, des Aufbringens einer Selbstklebefolie, des dichteren Webens oder Wirkens des Stoffs oder des Webens oder Wirkens des Stoffs durch Verwendung voluminöserer Fäden oder einer beliebigen Kombination davon umfasst.

10. Verfahren nach Anspruch 9, wobei Schritt (a) die folgenden Vorgänge umfasst:
➢ Stapeln von zwei separaten Stoffschichten,
➢ Anbringen der Schichten in regelmäßigen Abständen durch Nähen, Kleben oder Thermobonding, um die einzelnen, parallelen Röhren zu bilden.

11. Verfahren nach Anspruch 9, wobei Schritt (a) die folgenden Vorgänge umfasst:
➢ Weben oder Wirken einer Doppelschicht aus Stoff, wobei beide Schichten gewoben oder gewirkt werden, um in regelmäßigen Abständen angebracht zu werden und die einzelnen, parallelen Röhren zu bilden

12. Verfahren nach Anspruch 9, das weiterhin den Schritt des Thermoformens der Doppelschicht aus Stoff umfasst

13. Batteriedeckel, der Folgendes umfasst:
➢ einen Anschluss zum Anschließen an eine Druckluftzufuhr und
➢ Adaptermittel zur Flüssigkeitsverbindung des Anschlusses mit der mindestens einen Röhre mit verringerter Luftdurchlässigkeit einer Stulpe nach einem der Ansprüche 1 bis 7,
wobei der Anschluss und die Adaptermittel einen integralen Teil des Deckels bilden.

14. Stromspeicherbatterie, die Folgendes umfasst:
➢ eine Stulpe mit mindestens einer Röhre mit verringerter Luftdurchlässigkeit nach einem der Ansprüche 1 bis 7,
➢ einen Anschluss zum Anschließen an eine Druckluftzufuhr und
➢ Adaptermittel zur Flüssigkeitsverbindung des Anschlusses mit der mindestens einen Röhre mit verringerter Luftdurchlässigkeit,
wobei der Anschluss und die Adaptermittel vorzugsweise ein integraler Teil eines Batteriedeckels nach Anspruch 13 sind.

15. Stromspeicherbatterie nach Anspruch 14, wobei die Adaptermittel einen Einlass, der an dem Anschluss vorgesehen ist, und mindestens einen kegelförmigen Auslass, der genau in die mindestens eine Röhre mit verringerter Luftdurchlässigkeit eingepasst ist, umfassen

## Revendications

1. Manchette pour des batteries d'accumulateurs électriques de type tubulaire comprenant plusieurs tubes individuels possédant des parois et une ouverture supérieure ainsi qu'une ouverture inférieure et formant un manchette du type d'une cartouchière,
**caractérisée en ce que**
la perméabilité à l'air des parois d'au moins un tube, mais non de l'ensemble de ces tubes individuels, est réduite dans une mesure telle que des bulles d'air peuvent atteindre l'ouverture inférieure du tube de manchette lorsqu'on applique de l'air sur son ouverture supérieure dans les conditions en vigueur dans ladite batterie d'accumulateurs électriques.

2. Manchette selon la revendication 1, dans laquelle la perméabilité réduite à l'air d'au moins un tube est inférieure à 0,17 m³/(m².s) [1 1/(cm².min)] sous une pression de 2.10⁶ Pa [2 bar]

3. Manchette selon la revendication 1 ou 2, comprenant une étoffe tissée, une étoffe tricotée et/ou un non-tissé.

4. Manchette selon la revendication 3, dans laquelle les parois dudit au moins un tube comprennent une étoffe tissée ou une étoffe tricotée, et dans laquelle la perméabilité à l'air des parois dudit au moins un tube est réduite en tissant ou en tricotant l'étoffe de manière plus dense et/ou en utilisant des fils plus volumineux

5. Manchette selon l'une quelconque des revendications précédentes, dans laquelle la perméabilité à l'air des parois dudit au moins un tube est réduite par enduction ou par imprégnation avec une colle thermofusible ou en appliquant un film autoadhésif.

6. Manchette selon la revendication 5, dans laquelle la colle thermofusible est choisie parmi des polymères, des copolymères et des copolymères séquencés d'éthylène, de propylène, d'éthylène et d'acétate de vinyle, l'acétate de polyvinyle, des polyamides, d'autres résines d'hydrocarbures ou leurs mélanges

7. . Manchette selon l'une quelconque des revendications précédentes, dans laquelle ledit au moins un tube est un tube externe

8. . Utilisation d'une manchette selon l'une quelconque des revendications 1 à 7 dans une batterie d'accumulateurs électriques.

9. Procédé pour la fabrication de manchettes multitubes pour des batteries d'accumulateurs électriques, comprenant les étapes dans lesquelles
(a) on forme une double couche de tissu avec des fixations à des intervalles réguliers pour obtenir des tubes parallèles individuels possédant des parois et une ouverture supérieure ainsi qu'une ouverture inférieure ; et
(b) on réduit la perméabilité à l'air de parties de feuilles de tissu par rapport à au moins un tube, mais non par rapport à l'ensemble de ces tubes individuels dans une mesure telle que des bulles d'air se forment à l'ouverture inférieure du tube de manchette lorsqu'on applique de l'air sur son ouverture supérieure dans les conditions en vigueur dans ladite batterie d'accumulateurs électriques dans lequel l'étape (b) comprend les opérations de traitement avec un agent imperméabilisant, d'application d'un film autoadhésif, de tissage ou de tricotage de l'étoffe de manière plus dense ou bien de tissage ou de tricotage de l'étoffe en utilisant des fils plus volumineux, ou de l'une quelconque de leurs combinaisons

10. Procédé selon la revendication 9, dans lequel l'étape (a) comprend les opérations :
➢ d'empilage de deux couches discrètes d'étoffe ;
➢ de fixation des couches à des intervalles réguliers par couture, collage ou thermocollage pour obtenir lesdits tubes parallèles individuels

11. Procédé selon la revendication 9, dans lequel l'étape (a) comprend les opérations :
➢ de tissage ou de tricotage d'une double couche d'étoffe, les deux couches étant tissées ou tricotées de telle sorte qu'elles sont fixées à des intervalles réguliers et qu'elles forment lesdits tubes parallèles individuels

12. Procédé selon la revendication 9, comprenant en outre l'étape de thermoformage de la double couche d'étoffe

13. Couvercle de batterie comprenant :
➢ un accès pour la connexion à une alimentation d'air sous pression ; et
➢ un moyen faisant office d'adaptateur pour relier par fluide ledit accès audit au moins un tube possédant une perméabilité réduite à l'air d'une manchette selon l'une quelconque des revendications 1 à 7 ;
l'accès et le moyen faisant office d'adaptateur faisant partie intégrante dudit couvercle

14. Batterie d'accumulateurs électriques comprenant :
> une manchette possédant au moins un tube présentant une perméabilité réduite à l'air conformément à une quelconque des revendications 1 à 7 ;
➢ un accès pour la connexion à une alimentation d'air sous pression ; et
➢ un moyen faisant office d'adaptateur pour relier par fluide ledit accès audit au moins un tube possédant une perméabilité réduite à l'air ;
l'accès et le moyen faisant office d'adaptateur faisant de préférence partie intégrante d'un couvercle de batterie selon la revendication 13

15. Batterie d'accumulateurs électriques selon la revendication 14, dans laquelle le moyen faisant office d'adaptateur comprend une entrée adaptée audit accès et au moins une sortie de forme tronconique bien ajustée dans ledit au moins un tube présentant une perméabilité réduite à l'air
